# EUROPEAN PATENT SPECIFICATION

(11) **EP 2 987 705 B1**
(45) Date of publication and mention of the grant of the patent: **14.02.2018**
(21) Application number: 14181767.6
(22) Date of filing: 21.08.2014
(51) Int. Cl.: B62D 21/15, B62D 25/08

(54) **A vehicle front body structure for small overlap mitigation**
Fahrzeugvorderwagenaufbau für kleine Überlappungsabschwächung
Structure de carrosserie frontale de véhicule destinée à une faible atténuation de chevauchement

(43) Date of publication of application: 24.02.2016
(73) Proprietor: Volvo Car Corporation, 40531 Göteborg (SE)
(72) Inventor: Sandahl, Anders, 42357 Torslanda (SE); Kling, Anders, 42344 Torslanda (SE); Fermer, Mikael, 43349 Partille (SE)
(74) Representative: Volvo Car Corporation

(56) References cited:
- WO-A1-2014/088045
- WO-A1-2014/112596
- DE-A1-102012 014 449
- US-A1- 2013 320 709

## Description

### TECHNICAL FIELD

Example embodiments presented herein are directed towards a vehicle front body structure for small overlap mitigation. Document US 2013/0320709 A1 discloses the preamble of independent claim 1.

### BACKGROUND

A frontal vehicle crash is one of the most common types of accidents. One class of front vehicle crashes is known as a head-on collision, in which the center frontal area of the vehicle collides with another vehicle or an object. Frontal crashes may occur with varying degrees of overlap, impact speed and angle of interaction. Regulatory and consumer information crash testing procedures have traditionally focused on crashes with full frontal overlap, for example, head-on collision with 100% of the vehicle width engaged, and crashes with 40% overlap, for example, 40% of the vehicle width is engaged. In real world scenarios, small overlap crashes with less than 30% overlap represent an important share of frontal crashes resulting in occupant injuries. Small overlap collisions typically bypass the main load path of the front body structure, therefore these collisions are generally harder to mitigate.

Front body structures of vehicles are constructed to minimize the damage to the occupant compartment and minimize harm to the driver and passengers caused by frontal collisions such as small overlap and head-on crashes. There are various subcomponents within a front body structure to minimize the effect of frontal collisions. Different subcomponents of the front body structure are directed towards minimizing the effects of different type of collisions.

One such subcomponent is known as a crash box located at a front-most position of the front body structure. The crash box is used to absorb the energy resulting from a head-on collision. Head-on or large overlap collisions generally engage the main load paths of the front body structure. Another example subcomponent is in the form of longitudinal side members forming an external parameter of the front body structure. The longitudinal side members are typically used to further mitigate large overlap or head-on collisions.

Another type of frontal crash is a small overlap crash in which the front corner of a vehicle collides with another vehicle or an object. Small overlap collisions typically bypass the main load path of the front body structure, therefore these collisions are generally harder to mitigate.

### SUMMARY

Once a vehicle has undergone a small overlap collision, the wheel of the vehicle is typically pushed into the front body structure and the vehicle continues to move in a longitudinal direction along the length of the vehicle. As the vehicle continues to move in the longitudinal direction, it will likely slide along the source of impact, which may be a barrier or another vehicle. Thus, the continuous movement in the longitudinal direction will likely cause further damage to the exterior of the vehicle. It would be beneficial to provide a means of the vehicle moving away from the source of impact during a small overlap collision in order to minimize the damage done to the vehicle and possible harm to the occupant.

At least one example object of the example embodiments presented herein is provide a front body structure of a vehicle configured to efficiently move the vehicle away from a point of impact during a small overlap collision. Thus, according to some of the example embodiments, the front body structure comprises an impact force transfer mechanism configured to change a direction of a force created due to a small overlap collision from a longitudinal direction into a lateral direction, thereby changing the direction of motion of the vehicle.

The example embodiments presented herein have the example advantages such that as the vehicle is moved in the lateral direction, the damage done to the vehicle may be mitigated. An additional advantage of the example embodiments presented herein is that the impact force transfer mechanism operates independently of other components in the front body structure. Therefore, the activation of impact force transfer mechanism will not unnecessarily cause the activation of other components in the front body structure, for example, a crash box.

Accordingly, some of the example embodiments are directed towards a vehicle front body structure for small overlap mitigation. The vehicle front body structure comprises a pair of longitudinal structural members. The front body structure further comprises a crossbar connecting the pair of longitudinal structural members, such that the crossbar further comprises an end member which is structurally free from a side surface of a corresponding longitudinal structural member. The front body structure also comprises a front compartment formed inside the pair of longitudinal structural members and the crossbar. The front body structure additionally comprises a solid body comprised within the front compartment.

The front body structure further comprises an impact force transfer mechanism comprised outside of the front compartment. The impact force transfer mechanism comprises the end member and the corresponding longitudinal structural member. During operation, once the end member has undergone a predetermined amount of deformation, in which the end member contacts the side surface of the corresponding longitudinal structural member, the impact force transfer mechanism is configured to change an impact force direction to a lateral direction for transmitting an impact force to the corresponding longitudinal structure member and the solid body. As the solid body is one of the most structurally sound components of the front body structure, it is beneficial to redirect the collision force to the solid body as a means to move vehicle towards the lateral direction.

Thus, the impact force transfer mechanism becomes activated upon the end member contacting the side of the corresponding longitudinal structural member after having undergone the predetermined amount of deformation. Therefore, the impact force mechanism is not directly connected to the side surface of the corresponding longitudinal structure member prior to activation. Thus, before the overlap collision, the end member is structurally free from the side of the corresponding longitudinal member. As a result, during a head-on collision, the impact force transfer mechanism will not be unnecessarily activated. This has the example advantage of reducing the amount of damage done to the front body structure while mitigating for various collisions. It should be appreciated that the front body structure need not be symmetrical. Thus the front body structure may comprise a single impact force transfer mechanism. However, it should be appreciated that the front body structure may also comprise two impact force transfer mechanisms on opposite sides of the front body structure.

According to some of the example embodiments, the end member is configured to contact the corresponding longitudinal structural member at a predetermined point. Connection at a predetermined point has the example advantage of providing a defined trajectory in which the collision force may travel to the lateral direction towards solid body, thereby causing the vehicle to move away for the source of impact.

It should also be appreciated that the end member also provides a protection barrier between the point of impact and the vehicle. The end member, in the deformed state, protects the components of the font body structure, for example, the guiding members from being removed from the front body structure upon impact. As a protection barrier the end member further provides a sliding surface between the vehicle and the point of impact. This has the example advantage of preventing further damage to the front body structure of the vehicle.

According to some of the example embodiments, the impact force transfer mechanism comprises at least one guiding member in which the impact force is transmitted through upon reaching the solid body. Thus, according to some of the example embodiments, the at least one guiding member may assist in forming the trajectory path in which the impact force is transmitted towards the solid body. The use of the at least one guiding member provides the example advantage of providing a defined trajectory path to the solid body, thereby increasing the effectiveness of moving the vehicle away from the source of impact.

According to some of the example embodiments, the at least one guiding member is a plurality of guiding members. According to these example embodiments, when the end member contacts the corresponding longitudinal structural member, the plurality of guiding members are configured to form a trajectory path for the impact force towards the solid body. This has the example advantage of efficiently and accurately providing a path for the collision force towards the solid body, thereby changing the direction of the impact from a longitudinal direction to a lateral direction. The change of direction of the force results in the vehicle being moved away from the point of impact.

According to some of the example embodiments, the at least one guiding member is made of a metal (e.g., steel, aluminum, magnesium, etc.), nonmetal (e.g., plastics, elastomers, etc.) or hybrids thereof. Thus, the at least one guiding member comprises a sufficient amount of stiffness and strength to change the direction of the impact force and transfer the force towards the solid body.

According to some of the example embodiments, the at least one guiding member is comprised on a side surface and/or within the end member and/or the at least one guiding member is comprised on a side surface and/or within the corresponding longitudinal structure member. It should further be appreciated that any of the at least one guiding members may be pre-existing front body structure components which have a pre-existing function in the front body structure. Examples of such pre-existing components may be any component from the structure body or chassis, any portion of a power train, electronic components, or any other structure which is sufficiently rigid or stiff. The at least one guiding member may also be a dedicated structure used for the purpose of altering the direction of an impact force.

According to some of the example embodiments, the at least one guiding member is integrated or attachable to the end member and/or the corresponding longitudinal structure member. According to some of the example embodiments, the impact force transfer mechanism is comprised on a main and/or lower load path of the vehicle.

According to some of the example embodiments, the predetermined amount of deformation of the at least one end member comprises a range of free motion prior to the end member making contact with the corresponding longitudinal structural member. The free motion is a result of the end member being structurally free from a side on the corresponding longitudinal side member. The amount of free motion may vary from vehicle to vehicle depending on, for example, safety requirements and the geometry of the vehicle.

According to some of the example embodiments, the front body structure may further comprises a crash box located on of the corresponding longitudinal structure member and adjacent to the crossbar. The crash box and the impact force transfer mechanism are configured to function independently of one another. At least one example advantage of this is reducing the possibility of improper activation of either the crash box or the impact force transfer mechanism.

According to some of the example embodiments, the solid body is an engine, a power unit or a power train. According to some of the example embodiments, the solid body further comprises an engaging member configured to engage a point of at least one of the longitudinal members.

Some of the example embodiments are directed towards a vehicle comprising the vehicle front body structure as described above.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 is an illustrative example of load paths in a vehicle front body structure;
FIGS. 2A and 2B are illustrative examples of a small overlap frontal crash;
FIG. 3 is an example of a vehicle front body structure;
FIG. 4 is an example of an overview vehicle front body structure, according to some of the example embodiments presented herein;
FIGS. 5A and 5B are illustrative examples of an impact force transfer mechanism, according to some of the example embodiments;
FIG. 6 is an illustrative example of an activation of an impact force transfer mechanism, according to some of the example embodiments presented herein; and
FIG. 7 is an illustrative example of an activation of a crash box and the independent functionality of the impact force transfer mechanism, according to some of the example embodiments presented herein.

### DETAILED DESCRIPTION

In the following description, for purposes of explanation and not limitation, specific details are set forth, such as particular components, elements, techniques, etc. in order to provide a thorough understanding of the example embodiments. However, it will be apparent to one skilled in the art that the example embodiments may be practiced in other manners that depart from these specific details. In other instances, detailed descriptions of well-known methods and elements are omitted so as not to obscure the description of the example embodiments. The terminology used herein is for the purpose of describing the example embodiments and is not intended to limit the embodiments presented herein.

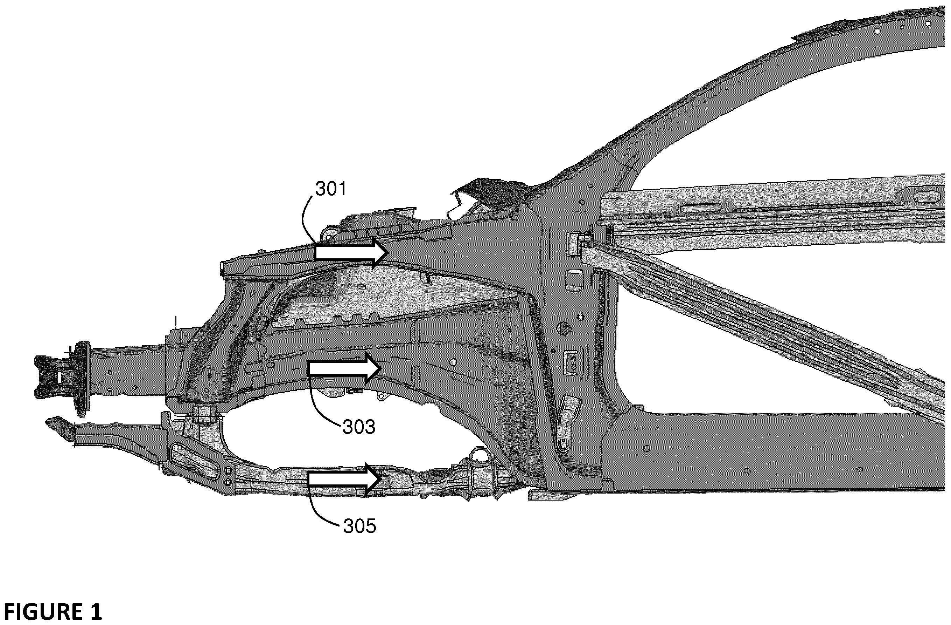

In order to provide a better explanation of the example embodiments presented herein, a problem will first be identified and discussed. Basic principles when designing body structures for crashes are a strong safety cage together with deformation zones in the front and the rear. Several load paths are usually utilized to absorb energy and transfer collision forces. Such load paths are illustrated in Figure 1. As shown in Figure 1, a front body structure may comprise an upper 301, main 303 and lower 305 load path.

Some load cases are especially challenging for the front body structure, for example, impacts with fixed objects like poles and trees in the front and side of the vehicle, vehicle-to-vehicle impacts that are oblique and/or only impacting parts of the structure such as small overlap crashes.

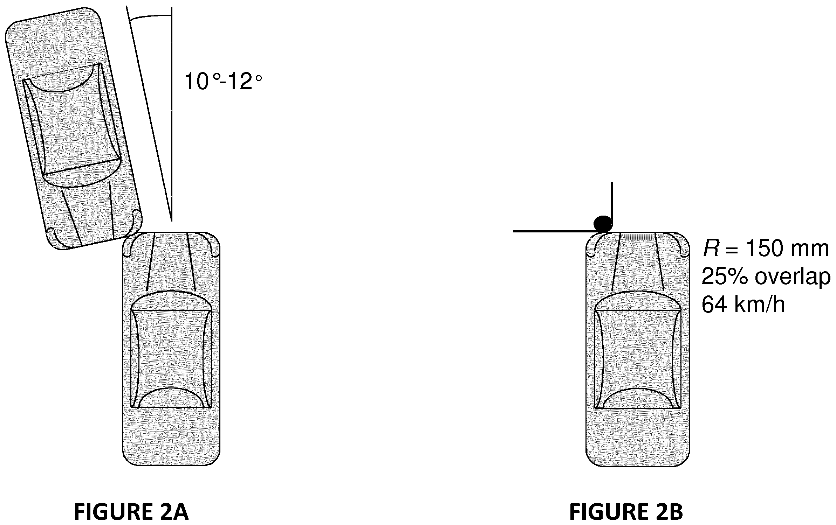

**Figure 2A** is an illustrative example of a vehicle-to-vehicle small overlap collision. As illustrated in Figure 2A, in a small overlap collision, the impact point is typically on an off-center location of a crossbar in the front body structure of both vehicles. In the example provided by Figure 2A, the vehicles are off-centered with respect to one another by an angle of approximately 10-12 degrees. **Figure 2B** illustrates a similar scenario of a small overlap crash in which a vehicle impacts a barrier on an off-center location on a cross bar of the front body structure. In the example provided in Figure 2B, the barrier overlaps 25% of the vehicle width. For many vehicles, this means that the main load paths will not be engaged.

Once a vehicle has undergone a small overlap collision, the wheel of the vehicle is typically pushed into the front body structure and the vehicle continues to move in a longitudinal direction along the length of the vehicle. As the vehicle continues to move in the longitudinal direction, it will likely slide along the source of impact, which may be a barrier or another vehicle. Thus, the continuous movement in the longitudinal direction will likely cause further damage to the exterior of the vehicle. It would be beneficial to provide a means of the vehicle moving away from the source of impact during a small overlap collision in order to minimize the damage done to the vehicle.

One means of moving the vehicle way from the source of impact would be to alter the direction of the impact force from a longitudinal direction to a lateral direction thereby altering the momentum of the vehicle away from the source of impact. This may be achieved by directing the impact force to a longitudinal side member of the front body structure.

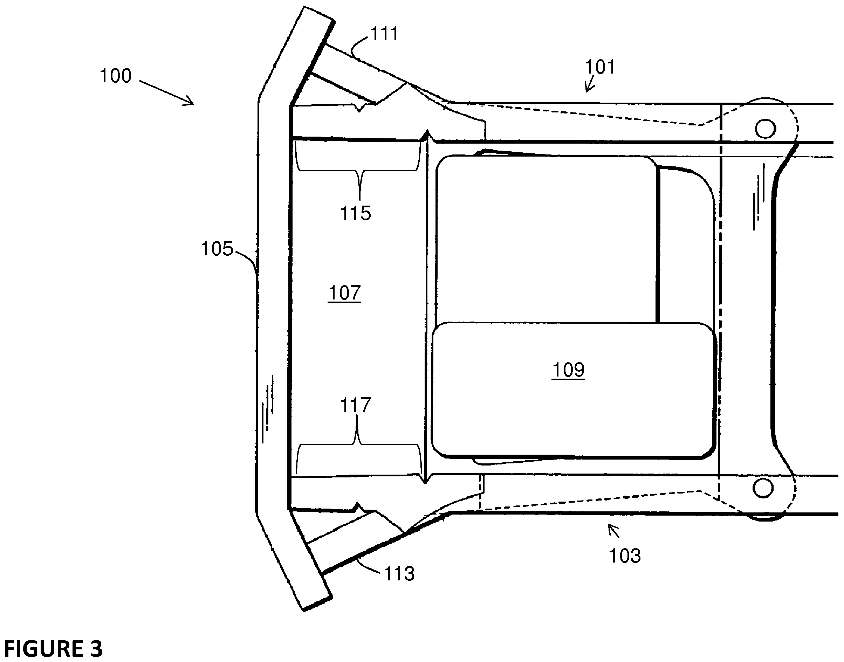

**Figure 3** illustrates an example of a front body structure 100 as described in U.S. Patent Application No. 6,957,846, in which the direction of an impact force is changed from a longitudinal direction into a lateral direction. The front body structure 100 comprises two longitudinal structural members 101 and 103. Each front-end of the longitudinal structural members 101 and 103 comprise a crash box 115 and 117, respectively. The front body structure 100 further comprises a crossbar 105. The interconnection of the crossbar 105 and the two longitudinal structural members 101 and 103 forms a front compartment 107 in which a power unit 109 is situated.

The front body structure 100 further comprises two y-bar members 111 and 113. The y-bar member 111 and 113 provides a direct connection between the crossbar 105 and a side surface of the longitudinal structural members 101 and 103, respectively.

It should be appreciated that the purpose of the crash boxes 115 and 117 is to absorb the energy of the head-on collision. Thus, upon impact, the crash boxes 115 and 117 are configured to deform and decrease in length. In contrast, the purpose of the y-bar members 111 and 113, as well as the longitudinal structural members 101 and 103 is to push the vehicle away from the source of the overlap collision. Thus, upon an overlap impact, the y-bar members 111 and 113, as well as the longitudinal structural members 101 and 103, are configured to change the direction of a collision force from a longitudinal direction, for example, in a direction along the length of the vehicle, into a lateral direction, for example, a direction perpendicular to the length of the vehicle.

In operation, during a head-on frontal collision, an object will hit a central portion of the crossbar 105 directly. As a result, a force from the frontal collision will cause an activation of the crash boxes 115 and 117. Simultaneously, the impact force from the frontal collision will act on y-bar members 111 and 113, which will thereby transfer the force towards the longitudinal structural members 101 and 103 and the power unit 109. Thus, the impact force of the head-on frontal collision will simultaneously result in the crash boxes 115 and 117 as well as the longitudinal structural members 101 and 103 to be acted upon.

As previously mentioned, the crash boxes 115 and 117 and the longitudinal structural members 101 and 103 are directed towards different functionality. Specifically, the crash boxes 115 and 117 are configured to absorb impact energy while the longitudinal structural members are configured to transfer an impact force. Thus, a negative consequence of the front body structure of Figure 3 is that the longitudinal structural members 101 and 103 may be unnecessarily acted upon during a head-on collision, thereby reducing the effectiveness of the crash boxes.

Thus, at least one example object of the example embodiments presented herein is provide a front body structure of a vehicle configured to efficiently move the vehicle away from a point of impact during a small overlap collision.

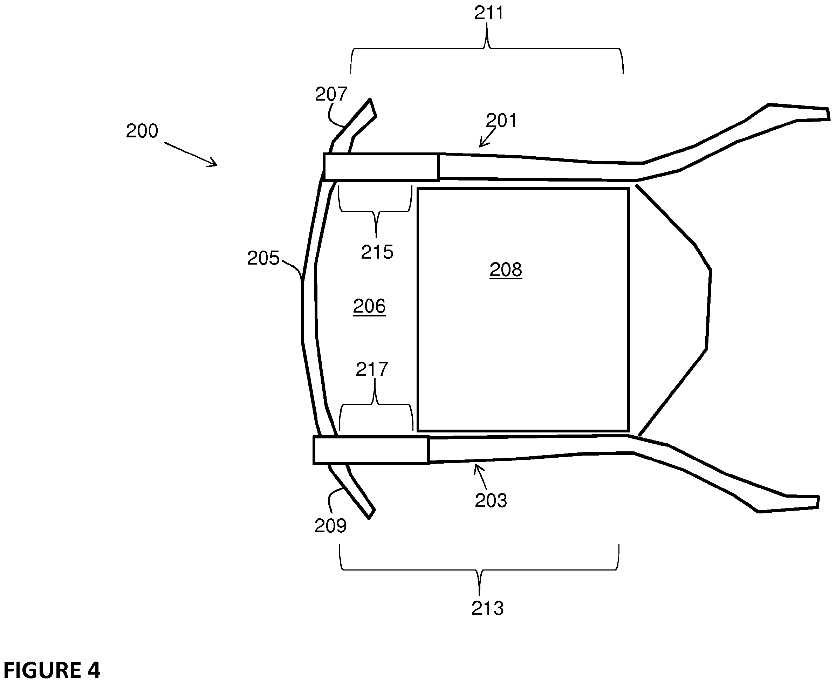

**Figure 4** illustrates a general overview example of a front body structure 200, according to some of the example embodiments, in which a crash box and impact force transfer mechanism may operate independently of one another. The front body structure 200 comprises two longitudinal structural members 201 and 203. According to some of the example embodiments, a top portion of the longitudinal structural members 201 and 203 comprise a crash box 215 and 217, respectively. The front body structure 200 also comprises a crossbar 205. The interconnection of the crossbar 205 and the two longitudinal structural members 201 and 203 forms a front compartment 206 in which a solid body 208 is situated. It should be appreciated that the solid body 208 may be a power unit, power train or any other body in which a collision force may be transferred to. The solid body 208 may be attached to the longitudinal structural members 201 and 203. Alternatively, the solid body 208 may be attachable to the front body structure via any form of engaging member. For example, the solid body may be attachable via bolts or bushings which connect the solid body to the longitudinal structural members or a subframe of the front body structure.

The crossbar 205 further comprises two end members 207 and 209. The front body structure 200 also comprises two impact force transfer mechanisms 211 and 213, each comprising a longitudinal structural member 201 and 203, and a crossbar end member 207 and 209, respectively. It should be appreciated that in contrast to the front body structure of Figure 3, the end members 207 and 209 are structurally free from a side surface of the longitudinal structural members 201 and 203, respectively. It should further be appreciated that the front body structure described herein need not be limited to two impact force transfer mechanisms or two end members. Specifically, according to some of the example embodiments, the front body structure does not have to be symmetrical and may comprise a single impact force transfer mechanism on either side of the front body structure.

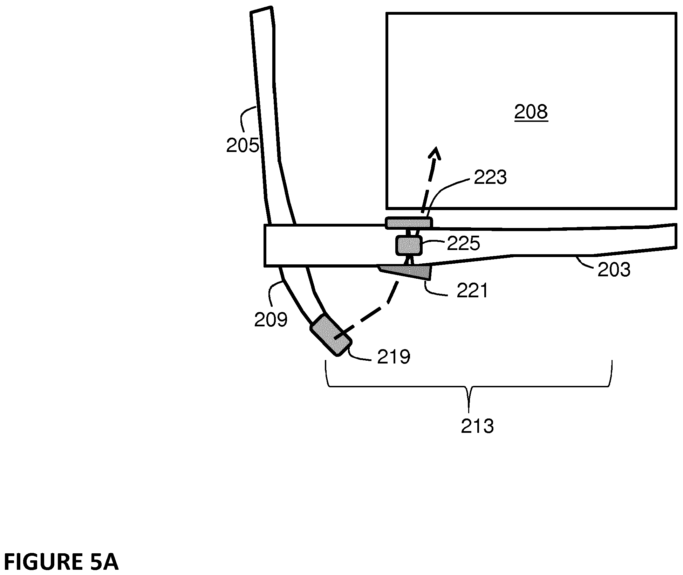

**Figure 5A** illustrates a detailed example of the impact force transfer mechanism 213, according to some of the example embodiments. The impact force transfer mechanism may comprise any number of guiding members. A guiding member is a component of the front body structure with a sufficient stiffness to transfer a collision force or load. Thus, in contrast to the crash box which is designed to deform upon impact and absorb the collision force, the impact force mechanism should be of a sufficient stiffness to be able to transfer the collision energy to the solid body 208. A guiding member may be a component of the front body structure which is designated to function as a guiding member or the guiding member may be an existing part with another primary purpose. An example of an existing part which may function as a guiding member may be any component from the structure body or chassis, any portion of a power train, electronic components, or any other structure which is sufficiently rigid or stiff.

As illustrated in Figure 5A, the impact force mechanism 213 comprises a guiding member 219 on the end member 209. The impact force mechanism 213 further comprises guiding members 221 and 223 on the external side surfaces of the corresponding longitudinal structural member 203. The impact force mechanism 213 also comprises a guiding member 225 on an internal surface of the longitudinal structural member 203.

According to some of the example embodiments, the guiding members may be of a different or same material as the front body structure. Example materials of guiding members may be metal, wood, plastic or any hybrid thereof. According to some of the example embodiments, the guiding members may be integrated or attachable to the front body structure.

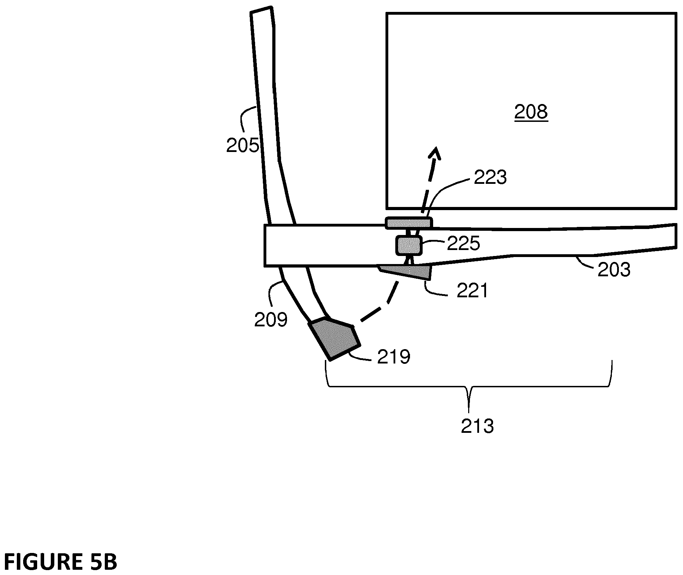

It should be appreciated that the guiding members of Figure 5A are provided merely as an example. The front body structure may comprise any number of guiding members. It should further be appreciated that the guiding members may also comprise any arbitrary shape, for example, as illustrated in **Figure 5B****.** In Figure 5B, the end member 209 comprises an arbitrarily shaped guiding member 219 which may function as a hammer when the guiding member 219 comes into contact with the side of the longitudinal side member 203. The shape of any of the guiding members may be provided such that the impact force is transmitted through the guiding members in a predetermined trajectory. The shape of the guiding members may also be provided such that the end member 209 contacts the side of the longitudinal side member at a predetermined point.

It should be appreciated that once the end member 209 comes into contact with the side of the longitudinal structural member 203; the end member may further function as a protective barrier. Specially, the end member may serve as a sliding surface between the vehicle and the point or source of impact. Furthermore, the end member may provide protection to the various components of the front body structure, for example, the guiding members. The end member may be utilized to ensure such components are not further damaged during the sliding or moving away from the source of impact.

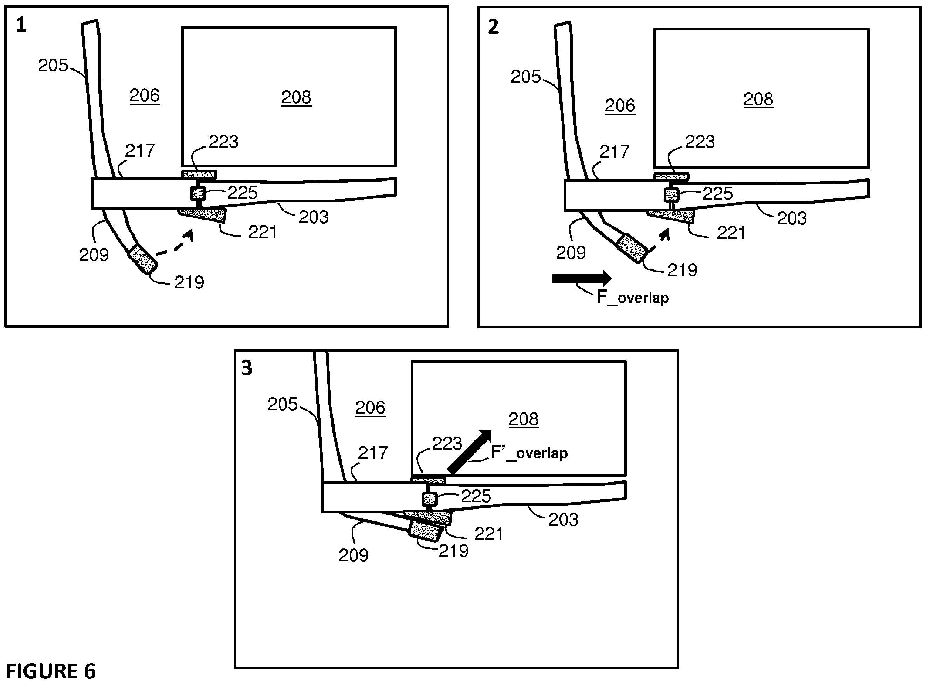

**Figure 6** illustrates an example operation of the impact force transfer mechanism 213 of Figures 4, 5A and 5B. Frame 1 illustrates the impact force transfer mechanism 213 in an initial state, prior to a collision. As illustrated in frame 1, the end member 209 is not in direct contact with the side surface of the corresponding longitudinal structural member 203.

Frame 2 illustrates the impact force transfer mechanism 213 upon a frontal overlap collision. The frontal overlap collision results in a force F_overlap, which is initially in a longitudinal direction towards the length of the vehicle, being directed towards an off-centred location in the frontal portion of the vehicle. As illustrated in frame 2, the crossbar end member 209 comprising a guiding member 219 has undergone a deformation due to the overlap collision force F_{_overlap}. The deformation results in the end member 209 moving towards the corresponding longitudinal structural member 203. The deformation of the crossbar end member 209 comprises a range of free motion before which the member 209 comes into contact with the corresponding longitudinal structural member 203.

It should be appreciated that the amount of free motion required to activate the impact force transfer mechanism will vary from vehicle to vehicle. The amount of free motion may depend on variables such as the geometry of the vehicle, for example, the larger a vehicle is, the larger the amount of free motion that may be provided for the end member in making contact with a side of the corresponding longitudinal member.

According to some of the example embodiments, during the free motion, the end member will travel along a circular path, as is illustrated by the dashed arrow of Figures 5A, 5B and 6. The free motion of the end member results in the closing of the gaps in the force transfer mechanism. Thus, upon the free range motion, the various components of the force transfer mechanism will come into contact as illustrated in the figures. According to some of the example embodiments, an example a radius of the free motion along the circular path is 20-100mm, 100-200mm, 50-60mm or approximately 100mm.

Frame 3 illustrates the activation of the impact force transfer mechanism 213 where the end member 209 comes into contact with the corresponding longitudinal structural member 203 at a predetermined point. Upon contact or activation of the impact force transfer mechanism 213, the guiding members 219, 221, 223 and 225 are aligned along the desired path for the transfer of the impact force. As a result, the direction of the collision force F_{_}overlap has changed into a lateral direction towards the solid body, resulting in a force F_{_overlap}. It should be appreciated that the lateral direction need not be a purely lateral direction but may be a mixture between a longitudinal and a lateral direction.

It should be appreciated that as the end member 209 is fully deformed, the end member may provide a sliding surface between the vehicle and the source of impact. The end member 209 may also serve to protect any of the components of the front body structure, for example, the guiding members, to minimize the damage of the structure during the sliding and pushing away of the vehicle after impact.

The guiding members 219, 221, 223 and 225 are of a sufficient stiffness and/or strength such that once the guiding members are aligned; there shall be a maximum of 15% residual plastic deformation of the guiding members. According to some of the example embodiments, the percent of residual plastic deformation of the guiding members may be between 0% through 3%, 0%-6%, no more than 10% or no more than 15%. It should be appreciated that an amount of plastic deformation may be determined by measuring a percentage of deformation after an impact has occurred. The percentage of deformation may be determined as a total residual deformation of the guiding members as percentage of initial total length of guiding members. Specifically, the difference in length, width and/or volume of the guiding member prior to and after the impact may be evaluated in determining the stiffness and/or strength.

Thus, in contrast to the crash boxes, which are configured to deform and thereby absorb the energy of the collision, the purpose of the impact force transfer mechanisms 211 and 213 is to transfer or alter the direction of the load or force and thereby push the vehicle laterally. In order to achieve this transfer, it is beneficial to have the guiding members as stiff and/or strong as possible.

It should be appreciated that the impact force transfer mechanism 213 of Figure 6 operates independently of the crash box 217. Specifically, during the activation of the impact force transfer mechanism 213, the crash box 217 has remained intact.

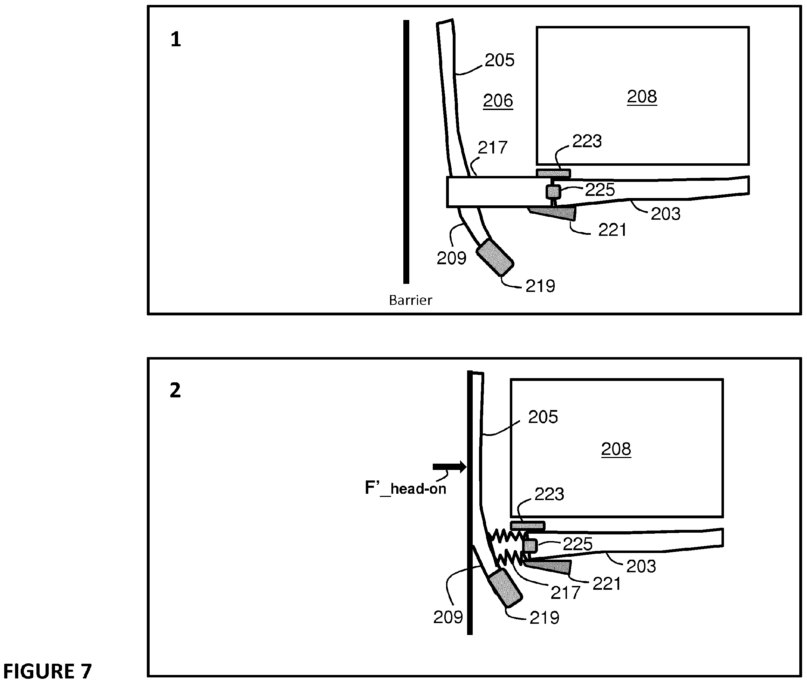

**Figure 7** illustrates the operation front body structure illustrated in Figures 4, 5A, 5B and 6 during a full-frontal collision. Frame 1 illustrates the front body structure prior to a collision. As illustrated in Frame 1, neither the crash box 217 nor the impact force transfer mechanism 213 has been activated.

Frame 2 illustrates the front body structure after the frontal impact. As illustrated, the crash box 217 has been activated and therefore deformed. The deformation of the crash box 217 results in an absorption of a collision energy resulting in a force F'__{head-on} between the barrier and the vehicle which is in a longitudinal direction. It should be appreciated that although the crash box 217 has been activated, in frame 2 the impact force transfer mechanism 213 has not been activated as the crossbar end member 209 is not in contact with the corresponding longitudinal structure member 203. Thus, as illustrated in the example provided in Figure 7, the activations of the crash box 217 and the impact force transfer mechanism 213 are independent of one another.

It should be appreciated that front body structure described herein may be comprised in a main 303 and lower 305 load path. The example embodiments presented herein may be provided on main 303 or lower load 305 path of the front body, as illustrated in **Figure 1****.** It should further be appreciated that while the example embodiments have been described with the use of guiding members, such elements are not essential to the functionality of the impact force transfer mechanism.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, and systems. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A vehicle front body structure for small overlap mitigation, the vehicle front body structure comprising:
a pair of longitudinal structural members **(201, 203);**
a crossbar **(205)** connecting the pair of longitudinal structural members **(201, 203),** such that the crossbar **(205)** further comprises an end member **(207, 209)** which is structurally free from a side surface of a corresponding longitudinal structural member **(201, 203);**
a front compartment **(206)** formed inside the pair of longitudinal structural members **(201, 203)** and the crossbar **(205);**
a solid body **(208)** comprised within the front compartment **(206);** and
an impact force transfer mechanism **(211, 213)** comprised outside of the front compartment **(206),** the impact force transfer mechanism **(211, 213)** comprising the end member **(207, 209)** and a corresponding longitudinal structural member **(201, 203);**
the impact force transfer mechanism **(211, 213)** is configured to change an impact force direction to a lateral direction for transmitting the impact force to the corresponding longitudinal structure member **(201, 203)** and the solid body **(208); characterized in that**, upon a predetermined amount of deformation of the end member **(207, 209),** the end member **(207, 209)** contacts the side surface of the corresponding longitudinal structural member **(201, 203);** wherein the predetermined amount of deformation of the end member **(207, 209)** comprises a range of free motion prior to the end member **(207, 209)** making contact with the corresponding longitudinal structural member **(201, 203),** wherein the range of free motion is defined by a circle having a radius of 100mm or by a circle having a radius in a range of 20-100mm, 100-200mm or 50-60mm.

2. The vehicle front body structure of claim 1, wherein the end member **(207, 209)** is configured to contact the corresponding longitudinal structural member **(201, 203)** at a predetermined point.

3. The vehicle front body structure of any of claims 1-2, wherein the impact force transfer mechanism **(211, 213)** comprises at least one guiding member **(219, 221, 223, 225)** in which the impact force is transmitted through upon reaching the solid body **(208).**

4. The vehicle front body structure of claim 3, wherein the at least one guiding member **(219, 221, 223, 225)** is a plurality of guiding members, wherein when the end member **(207, 209)** contacts the corresponding longitudinal structural member **(201, 203),** the plurality of guiding members are configured to form a trajectory path for the impact force towards the solid body **(208).**

5. The vehicle front body structure of any of claims 3-4, wherein the at least one guiding member **(219, 221, 223, 225)** is made of a metal, plastic, elastomer or a hybrid thereof.

6. The vehicle front body structure of any of claims 3-5, wherein the at least one guiding member **(219, 221, 223, 225)** comprises a stiffness and/or strength value such that an amount of residual deformation of the at least one guiding member after a collision is 0%-3%, 0%-6%, less than 10%, or less than 15%.

7. The vehicle front body structure of any of claims 3-6, wherein the at least one guiding member **(219, 221, 223, 225)** is comprised on a side surface and/or within the end member **(207, 209)** and/or the at least one guiding member is comprised on a side surface and/or within the corresponding longitudinal structure member **(201, 203).**

8. The vehicle front body structure of any of claims 3-7, wherein the at least one guiding member **(219, 221, 223, 225)** is integrated or attachable to the end member **(207, 209)** and/or the corresponding longitudinal structure member **(201, 203).**

9. The vehicle front body structure of any of claims 3-8, wherein the end member **(207, 209)** is configured to form a protection barrier between the front body structure and a point of impact after the predetermined amount of deformation has occurred, such that the end member provides a sliding surface between the vehicle and the point of impact.

10. The vehicle front body structure of any of claims 1-9, wherein the impact force transfer mechanism **(211, 213)** is comprised on a main **(301)** and/or lower **(305)** load path of the vehicle.

11. The vehicle front body structure of any of claims 1-10, further comprising a crash box **(215, 217)** located on an end of the corresponding longitudinal structure member **(201, 203)** and adjacent to the crossbar **(205),** wherein the crash box **(215, 217)** and the impact force transfer mechanism **(211, 213)** are configured to function independently of one another.

12. The vehicle front body structure of any of claims 1-11, wherein the solid body **(208)** is an engine, a power unit or a power train.

13. A vehicle comprising the vehicle front body structure of any of claims 1-12.

## Patentansprüche

1. Fahrzeugvorderwagenaufbau für kleine Überlappungsabschwächung, wobei der Fahrzeugvorderwagenaufbau Folgendes umfasst:
ein Paar sich längs erstreckender Bauteile (**201**, **203**),
eine Querverstrebung (**205**), die das Paar sich längs erstreckender Bauteile (**201**, **203**) auf eine solche Weise verbindet, dass die Querverstrebung (**205**) ferner ein Endteil (**207**, **209**) umfasst, das baulich frei von einer Seitenfläche eines entsprechenden sich längs erstreckenden Bauteils (**201**, **203**) ist,
ein vorderes Abteil (**206**), das in dem Paar sich längs erstreckender Bauteile (**201**, **203**) und der Querverstrebung (**205**) ausgebildet ist,
einen festen Aufbau (**208**), der in dem vorderen Abteil (**206**) enthalten ist, und
einen eine Auftreffkraft übertragenden Mechanismus (**211**, **213**), der außerhalb des vorderen Abteils (**206**) enthalten ist, wobei der eine Auftreffkraft übertragende Mechanismus (**211**, **213**) das Endteil (**207**, **209**) und ein entsprechendes sich längs erstreckendes Bauteil (**201**, **203**) umfasst,
wobei der eine Auftreffkraft übertragende Mechanismus (**211**, **213**) dazu ausgelegt ist, eine Auftreffkraftrichtung in eine seitliche Richtung umzuwandeln, um die Auftreffkraft zu dem entsprechenden sich längs erstreckenden Bauteil (**201**, **203**) und dem festen Aufbau (**208**) zu übertragen,
**dadurch gekennzeichnet, dass** bei einem vorgegebenen Betrag einer Verformung des Endteils (**207**, **209**) das Endteil (**207**, **209**) die Seitenfläche des entsprechenden sich längs erstreckenden Bauteils (**201**, **203**) berührt,
wobei der vorgegebene Betrag einer Verformung des Endteils (**207**, **209**) einen Bereich freier Bewegung umfasst, bevor das Endteil (**207**, **209**) in Berührung mit dem entsprechenden sich längs erstreckenden Bauteil (**201**, **203**) kommt, wobei der Bereich freier Bewegung durch einen Kreis, der einen Radius von 100 mm aufweist, oder durch einen Kreis, der einen Radius im Bereich von 20 bis 100 mm, 100 bis 200 mm oder 50 bis 60 mm aufweist, festgelegt ist.

2. Fahrzeugvorderwagenaufbau nach Anspruch 1, wobei das Endteil (**207**, **209**) dazu ausgelegt ist, das entsprechende sich längs erstreckende Bauteil (**201**, **203**) an einem vorgegebenen Punkt zu berühren.

3. Fahrzeugvorderwagenaufbau nach einem der Ansprüche 1 bis 2, wobei der eine Auftreffkraft übertragende Mechanismus (**211**, **213**) wenigstens ein Führungsteil (**219**, **221**, **223**, **225**) umfasst, durch welches die Auftreffkraft bei Erreichen des festen Aufbaus (**208**) übertragen wird.

4. Fahrzeugvorderwagenaufbau nach Anspruch 3, wobei das wenigstens eine Führungsteil (**219**, **221**, **223**, **225**) aus einer Vielzahl von Führungsteilen besteht, wobei, wenn das Endteil (**207**, **209**) das entsprechende sich längs erstreckende Bauteil (**201**, **203**) berührt, die Vielzahl von Führungsteilen dazu ausgelegt ist, eine Bewegungsbahn für die Auftreffkraft in Richtung zu dem festen Aufbau (**208**) zu bilden.

5. Fahrzeugvorderwagenaufbau nach einem der Ansprüche 3 bis 4, wobei das wenigstens eine Führungsteil (**219**, **221**, **223**, **225**) aus einem Metall, einem Kunststoff, einem Elastomer oder einer Mischform aus denselben hergestellt ist.

6. Fahrzeugvorderwagenaufbau nach einem der Ansprüche 3 bis 5, wobei das wenigstens eine Führungsteil (**219**, **221, 223, 225**) einen Steifigkeits- und/oder Festigkeitswert auf eine solche Weise umfasst, dass ein Betrag einer Restverformung des wenigstens einen Führungsteils nach einem Aufprall 0% bis 3%, 0% bis 6%, weniger als 10% oder weniger als 15% beträgt.

7. Fahrzeugvorderwagenaufbau nach einem der Ansprüche 3 bis 6, wobei das wenigstens eine Führungsteil (**219**, **221, 223, 225**) auf einer Seitenfläche und/oder innerhalb des Endteils (**207**, **209**) enthalten ist und/oder das wenigstens eine Führungsteil auf einer Seitenfläche und/oder innerhalb des entsprechenden sich längs erstreckenden Bauteils (**201**, **203**) enthalten ist.

8. Fahrzeugvorderwagenaufbau nach einem der Ansprüche 3 bis 7, wobei das wenigstens eine Führungsteil (**219**, **221**, **223**, **225**) in dem Endteil (**207**, **209**) und/oder dem entsprechenden sich längs erstreckenden Bauteil (**201**, **203**) integriert oder an diesen anbringbar ist.

9. Fahrzeugvorderwagenaufbau nach einem der Ansprüche 3 bis 8, wobei das Endteil (**207**, **209**) dazu ausgelegt ist, nach Auftreten des vorgegebenen Betrags einer Verformung eine Schutzbarriere zwischen dem Vorderwagenaufbau und einem Auftreffpunkt auf eine solche Weise zu bilden, dass das Endteil eine Gleitfläche zwischen dem Fahrzeug und dem Auftreffpunkt bereitstellt.

10. Fahrzeugvorderwagenaufbau nach einem der Ansprüche 1 bis 9, wobei der eine Auftreffkraft übertragende Mechanismus (**211**, **213**) auf einem Hauptlastweg (**301**) und/oder unteren Lastweg (**305**) des Fahrzeugs enthalten ist.

11. Fahrzeugvorderwagenaufbau nach einem der Ansprüche 1 bis 10, der ferner eine Crashbox (**215**, **217**) umfasst, die sich an einem Ende des entsprechenden sich längs erstreckenden Bauteils (**201**, **203**) und angrenzend an die Querverstrebung (**205**) befindet, wobei die Crashbox (**215**, **217**) und der eine Auftreffkraft übertragende Mechanismus (**211**, **213**) dazu ausgelegt sind, unabhängig voneinander zu funktionieren.

12. Fahrzeugvorderwagenaufbau nach einem der Ansprüche 1 bis 11, wobei es sich bei dem festen Aufbau (**208**) um einen Motor, ein Antriebsaggregat oder einen Antriebsstrang handelt.

13. Fahrzeug, das einen Fahrzeugvorderwagenaufbau nach einem der Ansprüche 1 bis 12 umfasst.

## Revendications

1. Structure de carrosserie frontale de véhicule destinée à une faible atténuation de chevauchement, la structure de carrosserie frontale de véhicule comprenant:
une paire d'éléments structurels longitudinaux (201, 203);
une traverse (205) qui connecte la paire d'éléments structurels longitudinaux (201, 203), de telle sorte que la traverse (205) comprenne en outre un élément d'extrémité (207, 209) qui est structurellement libre à partir d'une surface latérale d'un élément structurel longitudinal correspondant (201, 203);
un compartiment avant (206) formé à l'intérieur de la paire d'éléments structurels longitudinaux (201, 203) et la traverse (205);
un corps solide (208) intégré à l'intérieur du compartiment avant (206); et
un mécanisme de transfert de force d'impact (211, 213) prévu à l'extérieur du compartiment avant (206), le mécanisme de transfert de force d'impact (211, 213) comprenant l'élément d'extrémité (207, 209) et un élément structurel longitudinal correspondant (201, 203) ;
le mécanisme de transfert de force d'impact (211, 213) est configuré de manière à changer une direction de force d'impact en une direction latérale pour transmettre la force d'impact à l'élément structurel longitudinal correspondant (201, 203) et au corps solide (208)
**caractérisée en ce que**, en cas de quantité prédéterminée de déformation de l'élément d'extrémité (207, 209), l'élément d'extrémité (207, 209) entre en contact avec la surface latérale de l'élément structurel longitudinal correspondant (201, 203),
dans laquelle la quantité prédéterminée de déformation de l'élément d'extrémité (207, 209) comprend une plage de mouvement libre avant que l'élément d'extrémité (207, 209) entre en contact avec l'élément structurel longitudinal correspondant (201, 203), dans laquelle la plage de mouvement libre est définie par un cercle qui présente un rayon de 100 mm, ou par un cercle qui présente un rayon compris dans une gamme de 20 mm à 100 mm, de 100 mm à 200 mm ou de 50 mm à 60 mm.

2. Structure de carrosserie frontale de véhicule selon la revendication 1, dans laquelle l'élément d'extrémité (207, 209) est configuré de manière à entrer en contact avec l'élément structurel longitudinal correspondant (201, 203) en un point prédéterminé.

3. Structure de carrosserie frontale de véhicule selon l'une quelconque des revendications 1 à 2, dans laquelle le mécanisme de transfert de force d'impact (211, 213) comprend au moins un élément de guidage (219, 221, 223, 225) à travers laquelle la force d'impact est transmise pour atteindre le corps solide (208).

4. Structure de carrosserie frontale de véhicule selon la revendication 3, dans laquelle ledit au moins un élément de guidage (219, 221, 223, 225) est une pluralité d'éléments de guidage, dans laquelle lorsque l'élément d'extrémité (207, 209) entre en contact avec l'élément structurel longitudinal correspondant (201, 203), la pluralité d'éléments de guidage sont configurés de manière à former un chemin de trajectoire pour la force d'impact en direction du corps solide (208).

5. Structure de carrosserie frontale de véhicule selon l'une quelconque des revendications 3 à 4, dans laquelle ledit au moins un élément de guidage (219, 221, 223, 225) est constitué d'un métal, d'un plastique, d'un élastomère ou d'un hybride de ceux-ci.

6. Structure de carrosserie frontale de véhicule selon l'une quelconque des revendications 3 à 5, dans laquelle ledit au moins un élément de guidage (219, 221, 223, 225) présente une valeur de rigidité et/ou de résistance de telle sorte qu'une quantité de déformation résiduelle dudit au moins un élément de guidage après une collision soit comprise entre 0 % et 3 %, entre 0 % et 6 %, soit inférieure à 10 %, ou inférieure à 15 %.

7. Structure de carrosserie frontale de véhicule selon l'une quelconque des revendications 3 à 6, dans laquelle ledit au moins un élément de guidage (219, 221, 223, 225) est intégré à une surface latérale et/ou à l'intérieur de l'élément d'extrémité (207, 209) et/ou ledit au moins un élément de guidage est intégré à une surface latérale et/ou à l'intérieur de l'élément structurel longitudinal correspondant (201, 203).

8. Structure de carrosserie frontale de véhicule selon l'une quelconque des revendications 3 à 7, dans laquelle ledit au moins un élément de guidage (219, 221, 223, 225) est intégré ou peut être attaché à l'élément d'extrémité (207, 209) et/ou à l'élément structurel longitudinal correspondant (201, 203).

9. Structure de carrosserie frontale de véhicule selon l'une quelconque des revendications 3 à 8, dans laquelle l'élément d'extrémité (207, 209) est configuré de manière à former une barrière de protection entre la structure de carrosserie frontale et un point d'impact après que la quantité prédéterminée de déformation ait été atteinte, de telle sorte que l'élément d'extrémité procure une surface de glissement entre le véhicule et le point d'impact.

10. Structure de carrosserie frontale de véhicule selon l'une quelconque des revendications 1 à 9, dans laquelle le mécanisme de transfert de force d'impact (211, 213) est intégré sur un chemin de charge principal (301) et/ou inférieur (305) du véhicule.

11. Structure de carrosserie frontale de véhicule selon l'une quelconque des revendications 1 à 10, comprenant en outre une boîte tampon (215, 217) située sur une extrémité de l'élément structurel longitudinal correspondant (201, 203) et adjacente à la traverse (205), dans laquelle la boîte tampon (215, 217) et le mécanisme de transfert de force d'impact (211, 213) sont configurés de manière à fonctionner indépendamment l'un de l'autre.

12. Structure de carrosserie frontale de véhicule selon l'une quelconque des revendications 1 à 11, dans laquelle le corps solide (208) est un moteur, une unité d'alimentation ou un groupe motopropulseur.

13. Véhicule comprenant la structure de carrosserie frontale de véhicule selon l'une quelconque des revendications 1 à 12.
